# EUROPÄISCHE PATENTSCHRIFT

(11) **EP 0 968 040 B1**
(45) Veröffentlichungstag und Bekanntmachung des Hinweises auf die Patenterteilung: **04.06.2003**
(21) Anmeldenummer: 98916934.7
(22) Anmeldetag: 12.03.1998
(51) Int. Cl.: B01D 37/02, C10M 175/00, B21D 37/18

(54) **VERFAHREN ZUM REINIGEN FLÜSSIGER KÜHLSCHMIERSTOFFE**
METHOD OF CLEANING LIQUID COOLING LUBRICANTS
PROCEDE D'EPURATION DE REFRIGERANTS LUBRIFIANTS LIQUIDES

(30) Priorität: 13.03.1997 DE 19710257
(43) Veröffentlichungstag der Anmeldung: 05.01.2000
(73) Patentinhaber: FILTERWERK MANN + HUMMEL GmbH, 71631 Ludwigsburg (DE); Bayerische Motoren Werke Aktiengesellschaft, 80788 München (DE)
(72) Erfinder: BAUMGARTNER, Reinhard, D-80803 München (DE); BREMER, Karl-Günther, D-52249 Eschweiler (DE); BUNGENBERG, Rudi, B-4700 Eupen (BE); JANNING, Walter, D-83558 Maitenbeth (DE); PANHANS, Joachim, D-82178 Puchheim (DE); RAUSCHER, Eduard, D-85276 Pfaffenhofen (DE)
(74) Vertreter: Voth, Gerhard, Dipl.-Ing.
(86) Internationale Anmeldenummer: EP9801451
(87) Internationale Veröffentlichungsnummer: WO98040148

(56) Entgegenhaltungen:
- DD-A- 211 282
- DE-A- 3 537 384
- US-A- 5 154 828
- DATABASE WPI Section Ch, Week 8535 Derwent Publications Ltd., London, GB; Class H07, AN 85-213205 XP002071403 & JP 60 135 483 A (NGK INSULATORS LTD)

## Beschreibung

Die Erfindung betrifft ein Verfahren zum Reinigen flüssiger Kühlschmierstoffe auf insbesondere Mineralölbasis, welche sich in Metallbearbeitungsanlagen bevorzugt kontinuierlich in Umlauf befinden, wobei eine Anschwemmfiltrationsanlage vorgesehen ist.

Vor allem zum Kühlen und zum Schmieren der Schnittstellen und zum Abtransport der anfallenden Abriebpartikel werden in spanabhebend bearbeitenden Metallbearbeitungsanlagen flüssige Kühlschmierstoffe auf der Basis von Emulsionen oder Ölen verwendet. Das Kühlschmiermittel befindet sich dabei kontinuierlich im Umlauf, und zur Versorgung mehrerer Metallbearbeitungsmaschinen wird das Kühlschmiermittel über eine zentrale Versorgungsanlage den einzelnen Maschinen wieder zugeführt.

Zur Erzielung optimaler Schnittbilder am Werkstück ist eine Reinigung der Kühlschmiermittel nach Gebrauch erforderlich. In den Kreislauf sind daher kontinuierlich arbeitende Reinigungsanlagen eingeschaltet, in denen das gebrauchte Kühlschmiermittel durch Sedimentationsanlagen, Magnete oder Filter vor allem von den festen Metallabriebteilen befreit wird.

Speziell zur Feinstreinigung der Mineralölkühlschmiermittel werden Anschwemmfilter verwendet, bei denen das Kühlschmiermittel zusammen mit einem Filterhilfsmittel aufgeschlämmt und danach unter Anschwemmung des Filterhilfsmittels auf ein Trägergewebe filtriert wird.

Ein solches Verfahren ist allgemein bekannt. Bei diesem Verfahren werden als Filterhilfsmittel hochoberflächenaktive adsorbierende feste Substanzen eingesetzt.

Insbesondere wird Bleicherde bevorzugt, welche eine durchschnittliche Korngröße von unter 0,06 mm besitzt.

Als Anschwemmfilter sind auch Systeme bekannt, die mit Eigenschmutzanschwemmung arbeiten. Diese Verfahren bieten allerdings bei hohen Anforderungen keine ausreichende Reinigung. Es werden daher im Normalfall in einem separaten Kreislauf Filterhilfsmittel angeschwemmt, bevor über den anschließenden zweiten Kreislauf die eigentliche Filtration stattfindet. Von den spanabhebend arbeitenden Maschinen bzw. Werkzeugmaschinen gelangt das Schmutzöl bzw. die Schmutzemulsion, welche mit Schleif-Honschlamm-, Metallspänen oder anderweitigen Verunreinigungen wie Walzhaut, Zunder belastet ist, über einen Schmutzrücklauf in einen Schmutzflüssigkeitspufferbehälter. Von dort wird über Filterpumpen Schmutzflüssigkeit über Kerzenfilter gefördert, wobei an den Kerzen sich der Schmutz ablagert und einen Schmutzfilterkuchen bildet. Das über die Filterkerzen gesäuberte Öl gelangt in einen Saubertank und wird von dort aus erneut zu den Maschinen oder Verbrauchern gefördert.

Aus der DD 211 282 ist eine Anwendung eines Filterverfahrens zum Reinigen von Prozessschmierstoffen bekannt. Ein Zentrifugalscheibendruckfilter, welcher über Rohrleitungen und Förderpumpen mit einem Schmutz- und einem Klarölbehälter sowie einem Anschwemmbehälter verbunden ist, wird verwendet und ist in einem Primär- und Sekundärkreislauf zwischen Schmutz und Klarölbehälter angeordnet. Dieses bekannte Verfahren erfordert eine Vormischung von Filterhilfsmittel und Bleicherde, um ein Verstopfen des Filterkuchens mit Bleicherde zu vermeiden.

Es ist ferner aus der US 5 154 828 ein Filtersystem bekannt, bei welchem Filterhilfsmittel zugesetzt wird, wobei das Filterhilfsmittel säurehaltiges Material enthält, um eine Neutralisation durchzuführen.

Ein Nachteil der bekannten Verfahren besteht darin, daß Filterhilfsmittel in großen Mengen erforderlich sind. Die Entsorgung dieser Filterhilfsmittel ist äußerst schwierig, da es sich hierbei um Schadstoffe handelt, die als Sondermüll entsorgt werden müssen. Außerdem sind die Filtrationsintervalle relativ kurz, da die Filterhilfsmittelschicht sehr schnell durch den aufgenommenen Schmutz zugesetzt ist und damit nur noch geringe Mengen an Flüssigkeit gefiltert werden kann.

Der Erfindung liegt die Aufgabe zugrunde, die genannten Nachteile zu vermeiden und ein Verfahren zum Reinigen flüssiger Kühlschmierstoffe zu schaffen, bei welchen der Verbrauch von Filterhilfsmitteln reduziert wird und die Filtrationsintervalle verlängert werden.

Diese Aufgabe wird ausgehend von dem Oberbegriff des Hauptanspruchs durch dessen kennzeichnenden Merkmale gelöst.

Der wesentliche Vorteil der Erfindung besteht darin, daß die Filterhufsmittel in Form einer Impfung, welche kontinuierlich oder diskontinuierlich erfolgt, dem Filtrationskreislauf zugeführt werden. Dies hat den Vorteil, daß sich die Porosität der Ablagerungen auf den Filterkerzen erhöht und damit die Standzeit, d. h. das Filtrationsintervall verlängert werden kann. Außerdem besteht mit diesem System die Möglichkeit, die Aufbringung der Filterhilfsmittel sehr genau zu dosieren und anhand des Durchflußwiderstandes der Flüssigkeit durch das Filtermittel die Qualität der Filtration zu steigern.

Die Erfindung sieht vor, daß die Impfung durch Zuführung des Filterhilfsmittels im Schmutzflüssigkeitszulauf erfolgt. Die Impfung kann damit unmittelbar vor dem Anschwemmfilter durchgeführt werden. Dadurch können kurze Leitungswege für das Filterhilfsmittel erzielt werden. Es besteht auch die Möglichkeit, das Zuimpfen des Filterhilfsmittels auf der Saugseite der Pumpe für die Schmutzflüssigkeit durchzuführen. Dadurch verringert sich der Impfdruck.

Gemäß einer weiteren Ausgestaltung der Erfindung wird die Impfung in Abhängigkeit von der Offenporigkeit des Filters gesteuert. Damit wird eine weitere Verbrauchsreduzierung von Filterhilfsmitteln erzielt.

Zusätzlich zu der Impfung wird eine Grundanschwemmung eines Filterhilfsmittels durchgeführt. Diese Grundanschwemmung weist jedoch eine wesentlich geringere Schichtdicke auf, als dies bei den bisher bekannten Anschwemmfiltern erforderlich war. Für die Grundanschwemmung dient Maisschrot oder Zellulose, für die Impfung wird Zellulose verwendet. Damit kann die Anschwemmung mit dem bisher verwendeten Kieselgur entfallen. Kieselgur ist ein gesundheitsgefährdender Stoff, der hohe Entsorgungskosten verursacht.

Bei der Verwendung von Zellulose oder Maisschrot als Impf- oder Anschwemmsubstanz besteht weiterhin der Vorteil, daß das verbrauchte Material beispielsweise thermisch entsorgt werden kann. Damit reduzieren sich die Entsorgungskosten erheblich.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Die Erfindung wird nachfolgend anhand eines Ausführungsbeispiels näher erläutert.

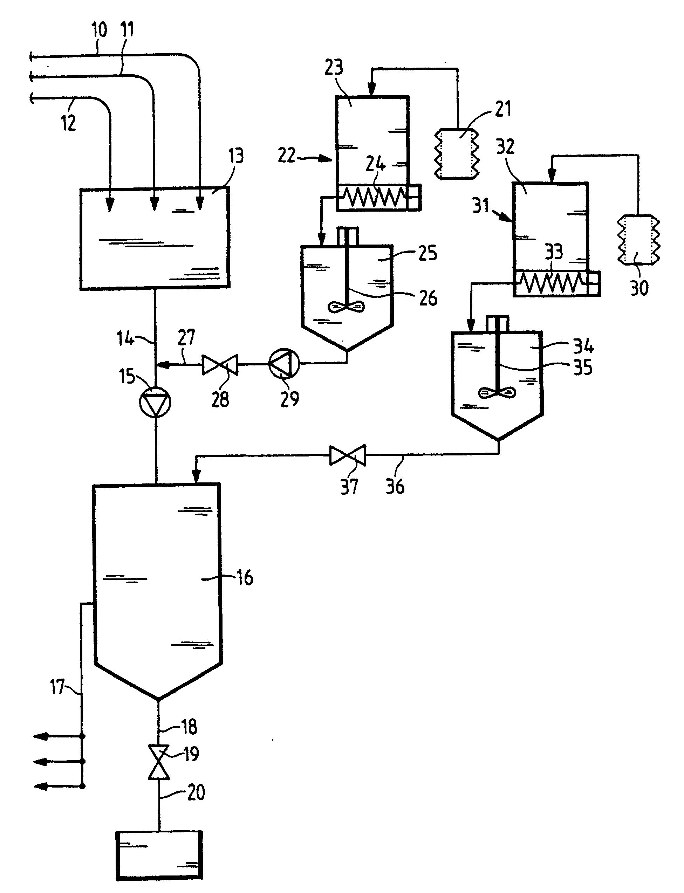

Die Figur zeigt den schematischen Aufbau einer Anlage zum Reinigen flüssiger Kühlschmierstoffe. Das von - hier nicht dargestellten - Werkzeugmaschinen zugeführte und mit Spänen und Verunreinigungen belastete Kühlschmiermittel wird über die Leitungen 10, 11, 12 in einen Schmutzbehälter 13 eingeleitet. Von diesem Schmutzbehälter 13 gelangt die Flüssigkeit über die Leitung 14 und eine Pumpe 15 zu einer Anschwemmfilteranlage 16. In einer Anschwemmfilteranlage befinden sich üblicherweise mehrere Kerzenfilter. Eine solche Anschwemmfilteranlage ist beispielsweise aus der DE 29 08 625 A1 bekannt.

Die gereinigte Flüssigkeit verläßt über die Leitung 17 die Anlage und kann den Werkzeugmaschinen über einen Reintank und eventuell zusätzlicher Pumpen wieder zugeführt werden. An der Austragsöffhung der Anschwemmfilteranlage 16 ist eine Leitung 18 und ein Ventil 19 angeordnet. Beim Öffnen des Ventils 19 wird der Schmutz und das Filterhilfsmittel in einen Behälter 20 gefördert.

Ein Filterhilfsmittel zur Grundanschwemmung, z. B. Zellulose, gelangt aus einem Behälter 21 zu einer Fördereinrichtung 22. Diese Fördereinrichtung weist ein Dosiergerät 23 und eine Schneckenfördereinrichtung 24 auf. Von hier aus wird das Filterhilfsmittel in einen Behälter 25 dosiert, welcher mit Öl oder Suspension gefüllt ist. Mit einem Rührwerk 26 wird das Filterhilfsmittel und die Flüssigkeit vermengt. Dies bedeutet, daß beim Filterstart zunächst die Grundanschwemmung bereitgestellt und zu dem Filter gepumpt wird. Nach Abschluß der Grundanschwemmung ist die Anschwemmfilteranlage betriebsbereit. Während des normalen Filtrationskreislaufes wird zusammen und gleichzeitig mit dem Filtrationskreislauf aus dem Impfbehälter 25 kontinuierlich oder auch diskontinuierlich Ölimpfsubstanz über die Leitung 27 und das Ventil 28 dem Filtrationskreislauf zugegeben, d. h. es wird mit einer Impfpumpe 29 kontinuierlich oder diskontinuierlich Ölimpfsubstanz in den Filtrationskreislauf eingeimpft. Um unnötigen Energieaufwand zu vermeiden, geschieht dies vorzugsweise durch Einspritzung der Impfsubstanz über die Rohrleitung 27 in die Rohrleitung 14.

Durch das Impfverfahren bedingt wird die über die Filterkerzen gepumpte Schmutzflüssigkeit ständig auch mit Impfsubstanz gemixt, so daß sich auf den Filterkerzen eine Mixtur, bestehend aus Impfanschwemmmittel und Schmutz bildet. Dadurch, daß während der laufenden Filtration kontinuierlich oder diskontinuierlich Impfanschwemmsubstanz eingeimpft wird, erhöht sich die Porosität der Ablagerungen auf den Filterkerzen bzw. die Eigenschaft der Schichtung und ermöglicht damit eine sehr effektive und hochwertige Filtrationsqualität. Ebenfalls wird durch die Impfung eine deutliche Verlängerung der Standzeit erreicht.

Zur Bildung einer Grundanschwemmung ist, wie in der Figur gezeigt, das Grundanschwemmmittel in einem Behälter 30 vorgesehen und wird von dort einer Fördereinrichtung 31, bestehend aus Dosiergerät 32 und Schneckenfördereinrichtung 33 zugeführt. Die Schneckenfördereinrichtung gibt das Grundanschwemmmittel in den Behälter 34, in welchem sich Öl oder Suspension befindet. Mit dem Rührwerk 35 wird das Grundanschwemmmittel mit dem Öl bzw. der Suspension vermischt und über die Leitung 36 und das Ventil 37 der Anschwemmfilteranlage vor Beginn eines Filtrationsvorganges zugeführt. Dabei setzt sich das Grundanschwemmmittel an den Filterkerzen ab und bildet eine erste Filterschicht.

Durch das nachfolgende Impfen der zugeführten Schmutzflüssigkeit wird eine bessere Qualität des Kühlschmierstoffes erzielt, d. h. der Reinheitsgrad der Kühlschmierstoffe erhöht sich.

## Patentansprüche

1. Verfahren zum Reinigen flüssiger Kühl schmierstoffe auf Mineralölbasis, welche sich in Metallbearbeitungsanlagen kontinuierlich in Umlauf befinden, unter Verwendung von im Kreislauf angeordneten Anschwemmfiltrationsanlagen, wobei eine kontinuierliche oder diskontinuierliche Filterhilfsmittelimpfung im Filtrationskreislauf durchgeführt wird und eine Grundanschwemmung eines Filterhilfsmittels erfolgt, **dadurch gekennzeichnet, dass** die Anschwemmmittel für die Grundanschwemmung Maisschrot oder Zellulose und für die Impfung Zellulose verwendet wird und dass bei der Verwendung von Zellulose als Anschwemmund/oder Impfsubstanz diese thermisch entsorgt werden kann und dass die Impfung auf den Filterkerzen durch unmittelbare Zuführung der Filterhilfsmittel im Schmutzflüssigkeitszulauf erfolgt.

2. Verfahren nach Anspruch 1, **dadurch gekennzeichnet, dass** die kontinuierliche oder diskontinuierliche Impfung derart erfolgt, dass die Offenporigkeit des Filters erhalten bleibt.

## Revendications

1. Procédé pour nettoyer des réfrigérants lubrifiants liquides à base d'huile minérale qui sont en continu en circulation dans les installation de traitement de métal en utilisant des installations de filtres à couches disposées dans le circuit ; une injection d'une composition facilitant la filtration dans le circuit de filtration étant réalisée de façon continue ou discontinue et une mise en suspension de base d'une composition facilitant la filtration ayant lieu, **caractérisé en ce qu'**on utilise comme agent de mise en suspension pour la mise en suspension de base du gruau de mais ou de la cellulose et pour l'injection de la cellulose et **caractérisé en ce que** lors de l'utilisation de la cellulose comme substance de mise en suspension et / ou substance d'injection, celle-ci peut être recyclée de façon thermique et **caractérisé en ce que** l'injection a lieu sur les bougies filtrantes par l'alimentation directe de compositions facilitant la filtration dans l'entrée de boue.

2. Procédé selon la revendication 1, **caractérisé en ce que** l'injection continue ou discontinue se déroule de manière à maintenir les pores du filtre ouvertes.

## Claims

1. Method for cleaning liquid cooling lubricants of mineral basis which are continuously circulating in metal processing installations by using pre-coat filtration plants located in the circuit, whereby a filter aid composition is continuously or discontinuously injected into the filtration circuit and whereby a basic suspension of a filter aid composition is realised, **characterised in that** shredded maize or cellulose are used for the suspension agent for the basic suspension and **in that** cellulose is used for the injection ; when cellulose is used as a suspension substance and / or as a injection substance, the said cellulose can thermally be recycled and **characterised in that** the injection on the filter candles is realised in directly supplying filter aid compositions in the sludge circuit.

2. Method according to claim 1, **characterised in that** the continuous or discontinuous injection is performed so as to maintain the open pore conformation of the filter.
